# FASCICULE DE BREVET EUROPEEN

(11) **EP 2 820 931 B1**
(45) Date de publication et mention de la délivrance du brevet: **04.08.2021**
(21) Numéro de dépôt: 14175439.0
(22) Date de dépôt: 02.07.2014
(51) Int. Cl.: A01B 33/06, A01B 33/08, A01B 63/111

(54) **Machine de travail du sol avec un dispositif de réglage de la profondeur de travail perfectionné**
Bodenbearbeitungsmaschine mit einer verbesserten Vorrichtung zum Einstellen der Arbeitstiefe
Soil working machine with an improved device for adjusting the working depth

(30) Priorité: 04.07.2013 FR 1356561
(43) Date de publication de la demande: 07.01.2015
(73) Titulaire: Kuhn SAS, 67700 Saverne (FR)
(72) Inventeur: Teitgen, Hervé, 57370 Phalsbourg (FR); Gies, Thomas, 57870 Plaine De Walsch (FR)
(74) Mandataire: Esch, Esther Evelyne

(56) Documents cités:
- WO-A1-2006/041293
- DE-A1- 3 431 796
- DE-C2- 3 448 546
- GB-A- 2 137 061
- None

## Description

La présente invention se rapporte au domaine technique général du machinisme agricole et notamment aux machines agricoles destinées à travailler le sol. L'invention concerne une machine de travail du sol comportant un châssis avec des outils de travail et un organe de référence disposé à l'arrière des outils de travail compte tenu du sens d'avance, le châssis portant au moins une poutre transversale sur laquelle est relié l'organe de référence par l'intermédiaire de deux bras distants l'un de l'autre, les outils de travail sont répartis sous la poutre transversale et sont entraînés en rotation via un carter de renvoi, un carter latéral et un arbre de transmission secondaire s'étendant sensiblement horizontalement et transversalement par rapport au sens d'avance pendant le travail, un dispositif de réglage de la profondeur de travail des outils est prévu entre chaque bras et la poutre transversale.

Une machine de ce type est connue par le document DE 10 2008 020 809 A1**.** La herse rotative comporte une poutre transversale avec des outils de travail et un organe de référence du type rouleau de rappuyage disposé derrière les outils de travail. Le rouleau est fixé à la poutre transversale via deux bras s'étendant à droite et à gauche des extrémités latérales de la poutre transversale. La herse rotative est dotée d'un dispositif de réglage permettant de positionner les outils de travail en hauteur par rapport à l'organe de référence. Un tel dispositif de réglage est associé à chaque bras. La position des outils de travail par rapport au rouleau est déterminée en fonction du perçage du secteur à trous dans lequel est placée manuellement la broche. Le réglage se fait donc par paliers, il n'est pas continu. Par ailleurs, si l'utilisateur désire modifier le réglage de la profondeur de travail des outils au cours du travail, il devra impérativement descendre du tracteur pour placer la broche dans un autre perçage. De plus, le réglage effectué sur l'un des bras et à reproduire sur l'autre bras.

Sur la herse rotative repliable AQUILA RAPIDO présentée dans le prospectus "Herse rotative pliable" de Maschio Gaspardo S.p.A. du 11-2010, le dispositif de réglage de la profondeur de travail est hydraulique. La herse rotative comporte un châssis qui supporte deux poutres transversales sous lesquelles sont montés les outils de travail. Derrière les outils de travail est disposé un rouleau de rappuyage. Chaque rouleau est fixé sur la poutre transversale correspondante au moyen de deux bras distants l'un de l'autre. Le réglage de la profondeur de travail est effectué au moyen d'un dispositif de réglage positionné de manière centrale sur chaque poutre transversale. Le dispositif de réglage comporte un vérin hydraulique. Dans cette zone centrale, à cheval au-dessus des deux poutres transversales, se trouve le carter de renvoi qui transmet le mouvement de rotation aux outils de travail. Ce mouvement de rotation est initié par l'arbre de prise de force du tracteur qui entraîne un carter de renvoi, lequel est relié par un arbre de transmission secondaire au carter latéral. Le vérin hydraulique est monté sur un support qui enjambe l'arbre de transmission secondaire. Le vérin hydraulique est placé à l'arrière et au-dessus de la poutre transversale. L'implantation du vérin hydraulique est pratiquement verticale, l'encombrement du dispositif de réglage est donc relativement important. Avec de tels dispositifs de réglage encombrant sur la machine de travail du sol, il n'est pas possible de monter une trémie ou des têtes de distribution équipant un semoir au-dessus des poutres transversales.

Le document WO 2006/041293 décrit une autre machine de travail du sol avec un dispositif de réglage de la profondeur actionné manuellement.

La présente invention a pour but de remédier aux inconvénients précités. Elle doit notamment proposer une machine agricole de travail du sol avec un dispositif de réglage de profondeur de travail moins encombrant avec les caractéristiques de la revendication 1.

A cet effet, une importante caractéristique de l'invention consiste en ce que au moins un dispositif de réglage s'étend, en vue de côté, sensiblement en avant d'un plan vertical passant par le centre de l'arbre de transmission secondaire, compte tenu de la direction d'avance. Grâce à cette caractéristique, le dispositif de réglage s'étend sensiblement au-dessus et dans la partie frontale de la poutre transversale dans un espace libre et surtout sans interférence avec l'arbre de transmission secondaire. Le dispositif de réglage selon l'invention n'enjambe donc pas l'arbre de transmission secondaire. De ce fait, l'implantation du dispositif de réglage est compacte. L'encombrement du dispositif de réglage s'inscrit dans l'encombrement de la machine de travail du sol.

Selon une autre caractéristique de l'invention, le dispositif de réglage s'étend dans le premier tiers de la distance séparant deux plans verticaux passant respectivement par l'axe de l'articulation avant du bras et par l'axe horizontal de l'organe de référence. Le dispositif de réglage est donc logé au-dessus de la poutre transversale.

Le dispositif de réglage, dans sa version hydraulique ou dans sa version à réglage manuel, peut être totalement logé dans le volume, au-dessus de la poutre transversale, dans la limite de hauteur du carter latéral. Il n'y a pas d'interférence du dispositif de réglage avec l'arbre de transmission secondaire. Le dispositif de réglage ne gêne pas l'entraînement par l'arbre de transmission secondaire.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de dessus d'une machine de travail du sol en deux parties conforme à l'invention,
- la **figure 2** représente une vue de côté de la machine de travail du sol de la figure 1,
- la **figure 3** représente une vue avant en perspective d'un dispositif de réglage selon l'invention au niveau d'un arbre de transmission secondaire,
- la **figure 4** représente une vue de dessus en perspective d'un dispositif de réglage selon l'invention,
- la **figure 5** représente une vue partielle en coupe selon l'axe V-V de la figure 1,
- la **figure 6** représente une vue de côté d'une machine de travail du sol selon un autre exemple de réalisation.

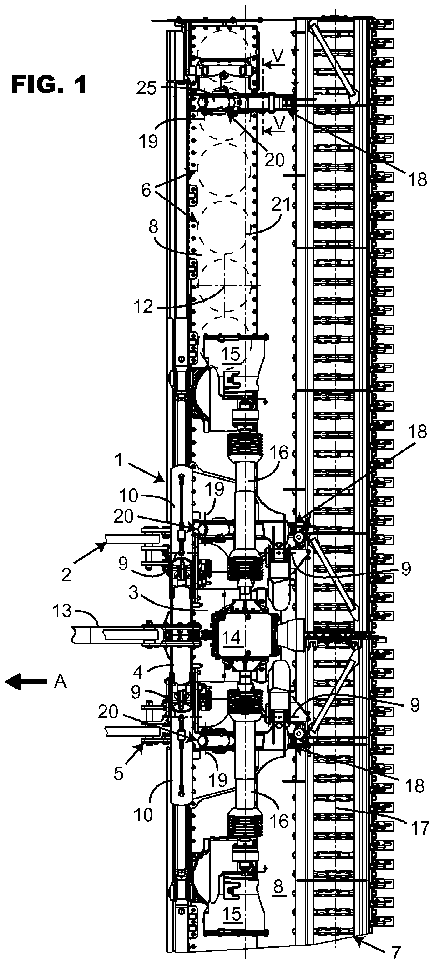

Sur la figure 1 apparaît une machine de travail du sol (1) liée à l'attelage arrière (2) d'un tracteur. Cette machine de travail du sol est destinée à la préparation de lits de semences. Elle comporte un châssis (3) avec un cadre (4) pourvu d'un système d'attelage (5). Dans l'exemple représenté, il s'agit d'un système d'attelage trois points. Il comporte deux points d'attelage inférieurs et un point d'attelage supérieur. Le tracteur est amené à déplacer et à animer la machine de travail du sol (1) suivant un sens d'avance indiqué par la flèche (A). Dans la suite de la description, les notions suivantes "avant", "arrière" et "devant", "derrière" sont définies par rapport au sens d'avance (A) et les notions "droite" et "gauche" sont définies en regardant la machine de travail du sol (1), de l'arrière, dans le sens d'avance (A). La machine de travail du sol (1) comporte également des outils de travail (6) et un organe de référence (7) implanté derrière les outils de travail (6). La fonction de l'organe de référence (7) est de contrôler la profondeur de travail des outils de travail (6).

La machine de travail du sol (1) de la figure 1 est une machine repliable en deux parties. Le châssis (3) porte ainsi deux poutres transversales (8) qui s'étendent transversalement au sens d'avance (A) au travail. La poutre transversale (8) située à gauche n'est représentée que partiellement et quelques outils de travail (6) ont été représentés en traits discontinus au niveau de la poutre transversale (8) de droite. Chaque poutre transversale (8) est reliée, via des articulations (9) d'axes dirigées selon le sens d'avance (A), au châssis (3). Ces deux poutres transversales (8) sont repliables vers le haut pour le transport sur route. La position repliée est obtenue à l'aide d'actionneurs (10) articulés chacun entre le châssis (3) et la poutre transversale (8) correspondante. L'actionneur (10) est, par exemple, un vérin hydraulique à double effet. Chaque poutre transversale (8) est donc repliable sensiblement verticalement pour le transport.

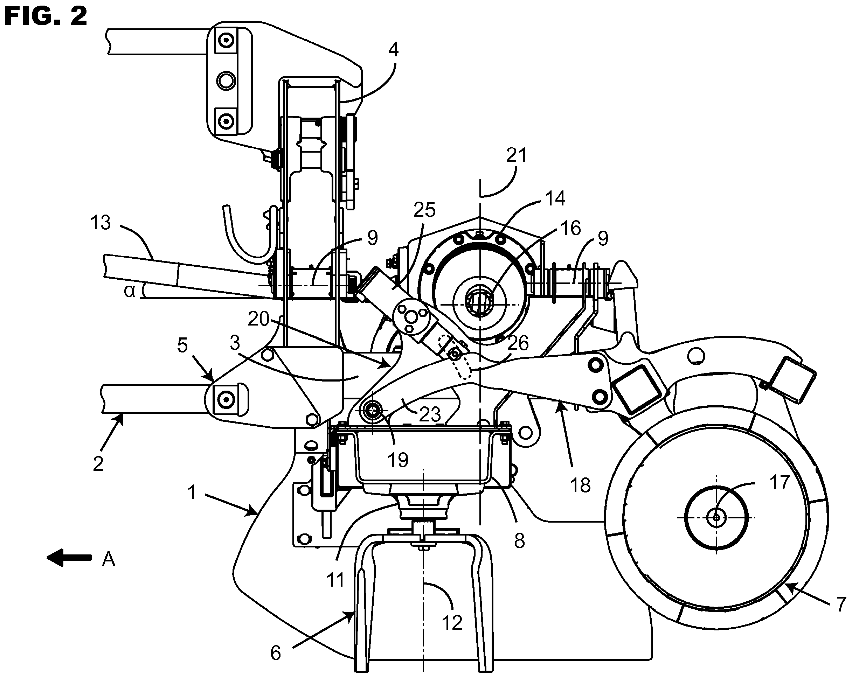

La machine de travail du sol (1), représentée sur la figure 2, est une herse rotative utilisée pour la reprise superficielle de labour et la préparation de lits de semences. Les outils de travail (6) s'étendent sous les poutres transversales (8) et sont montés sur des rotors de sorte à pouvoir tourner autour d'axes (12) respectifs dirigés verticalement. Chaque rotor est équipé de deux outils de travail (6) appelés aussi dents. La puissance nécessaire au fonctionnement est fournie par l'arbre de prise de force du tracteur par l'intermédiaire d'un carter de renvoi (14) et de carters latéraux (15). Un carter latéral (15) est monté directement sur la poutre transversale (8) correspondante et est positionné au milieu de celle-ci. Le carter latéral (15) s'étend donc au-dessus des outils de travail (6), dans l'encombrement de la machine de travail du sol (1). Des moyens d'entraînement (non représentés) pour les rotors sont logés dans la poutre transversale (8) qui est avantageusement creuse. La poutre transversale (8) présente un couvercle assemblé à l'aide de moyens de fixation tels que des boulons. Ainsi, un train de pignons met en mouvement des rotors de chaque côté du carter latéral (15). Le carter latéral (15) est, par exemple, un boîtier renvoi d'angle. Un arbre de transmission primaire (13) assure la liaison d'entraînement entre l'arbre de la prise de force du tracteur et le carter de renvoi (14). Un arbre de transmission secondaire (16) relie chaque carter latéral (15) au carter de renvoi (14). Les arbres de transmission secondaires (16) s'étendent transversalement et sensiblement horizontalement par rapport au sens d'avance (A) pendant le travail. Le carter de renvoi (14) s'étend, en vue de dessus, au milieu du châssis (3) repliable et les arbres de transmission secondaires (16) sont avantageusement alignés. L'arbre de transmission primaire (13) et l'arbre de transmission secondaire (16) sont des arbres de transmission à joints universels. On notera que des éléments de la herse rotative ont été déposés pour faciliter la compréhension.

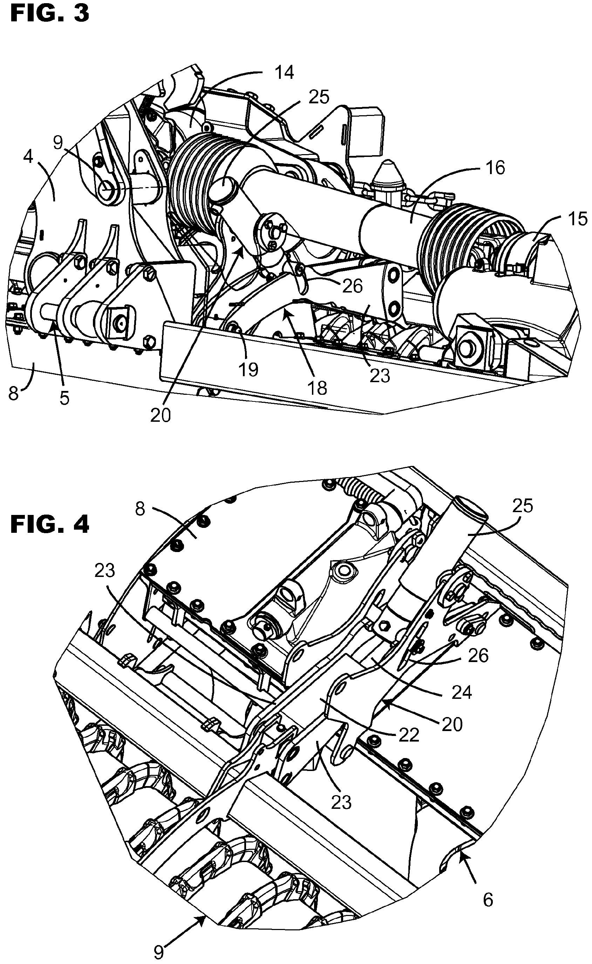

L'organe de référence (7), représenté sur les figures 1 et 4, est un rouleau qui a pour fonction de rappuyer le sol, de compléter l'émiettement de la terre et de contrôler la profondeur de travail. Il comporte une âme sensiblement cylindrique avec un axe horizontal (17) qui s'étend horizontalement et de préférence perpendiculairement au sens d'avance (A) au cours du travail. Le rouleau est généralement entraîné par le sol. Un rouleau est implanté derrière les outils de travail (6). Comme le châssis (3) est repliable, un rouleau est associé à chaque poutre transversale (8). Chaque rouleau est fixé à la poutre transversale (8) correspondante par l'intermédiaire de deux bras (18) distants l'un de l'autre. Les bras (18) s'étendent à droite et à gauche des extrémités latérales de la poutre transversale (8). Chaque bras (18) est pivotant et s'étend parallèlement au sens d'avance (A) au cours du travail. L'extrémité avant du bras (18) est liée à la poutre transversale (8) au moyen d'une articulation avant (19). L'axe de l'articulation avant (19) s'étend au moins parallèlement à l'axe horizontal (17) du rouleau. Le rouleau est guidé en rotation et est susceptible de pivoter autour de l'axe horizontal (17). Entre chacun des bras (18) et la poutre transversale (8) est prévu un dispositif de réglage (20) de la profondeur de travail des outils de travail (6). Le dispositif de réglage (20) a pour fonction de régler la position en hauteur du rouleau par rapport à la poutre transversale (8). La figure 3 représente, selon une vue avant en perspective, le dispositif de réglage (20) situé dans le voisinage de la partie centrale du châssis (3), au niveau de l'arbre de transmission secondaire (16). L'actionneur (10) n'est pas représenté sur cette figure 3. Pour une meilleure visibilité du bras (18), le support de gauche du dispositif de réglage (20) est représenté partiellement. La figure 4 représente, selon une vue de dessus en perspective, un dispositif de réglage situé à l'extrémité libre de la poutre transversale (8).

Selon une importante caractéristique de l'invention, au moins un dispositif de réglage (20) de la profondeur de travail s'étend, en vue de côté, sensiblement en avant d'un plan vertical (21) passant par le centre de l'arbre de transmission secondaire (16), compte tenu du sens d'avance (A). Avec une telle implantation, la disposition des pièces, constituant le dispositif de réglage (20), est plus ramassé et donc plus compact. L'encombrement en hauteur, en position travail, du dispositif de réglage (20) est réduit puisqu'il n'est pas nécessaire de contourner l'arbre de transmission secondaire (16). L'encombrement du dispositif de réglage s'inscrit dans l'encombrement de la machine de travail du sol (1). Grâce à cette caractéristique, le dispositif de réglage (20) se trouve proche de l'articulation avant (19) du bras (18) ce qui permet d'avoir une plage de réglage importante avec une course limitée. Le dispositif de réglage (20) agit directement sur le bras (18) de l'organe de référence (7). L'articulation avant (19) s'étend à l'avant du plan vertical (21) et l'organe de référence (7) s'étend à l'arrière du plan vertical (21).

Dans l'exemple de réalisation représenté aux figures 1 et 2, la machine de travail du sol (1) présente une largeur de travail de plus de 3, 50 mètres, elle est de ce fait repliable. Cette herse rotative est animée par un tracteur de forte puissance. Généralement sur de tels tracteurs, la position de l'arbre de prise de force par rapport au sol est relativement haute puisqu'il est aussi équipé de roues de grand diamètre. Pour assurer un entraînement en rotation durable et bénéficier de conditions d'entraînement favorables, l'angle (α) de fonctionnement de l'arbre de transmission primaire (13) doit être faible. Cet angle (α), représenté sur la figure 2, est l'angle entre l'arbre de transmission primaire (13) et un plan horizontal. De manière à maintenir un angle (α) faible, le carter de renvoi (14) est décalé en arrière compte tenu du sens d'avance (A) par rapport à l'axe vertical (12) de rotation des outils de travail (6). La longueur de l'arbre de transmission primaire (13) est donc aussi augmentée. On remarque que le plan vertical (21) passant par le centre de l'arbre de transmission secondaire (16) s'étend en arrière du plan vertical passant par l'axe vertical (12) de rotation des outils de travail (6) et que l'axe de l'articulation avant (19) s'étend en avant de l'axe vertical (12) de rotation des outils de travail (6). Le plan vertical passant par l'axe vertical (12) correspond aussi au plan de symétrie de la poutre transversale (8).

Au travail, le rouleau roule en s'appuyant sur le sol et détermine ainsi la profondeur de travail des outils de travail (6). Durant le travail, les dispositifs de réglage (20) de la profondeur de travail limitent le déplacement de la poutre transversale (8) par rapport à l'organe de référence (7) uniquement vers le bas. De cette manière, la poutre transversale (8) peut se déplacer provisoirement vers le haut, lorsque les outils de travail (6) rencontrent un obstacle enfoui dans le sol pendant que l'organe de référence (7) continue à rouler sur le sol. Le rouleau représenté sur les figures a également pour fonction de réaliser des sillons dans la terre. Il présente des couronnes radiales métalliques réalisées à partir de segments qui sont assemblés les uns aux autres. Sur d'autres rouleaux, les couronnes sont en caoutchouc. Dans un autre exemple de réalisation, le rouleau est muni de couronnes équidistantes disposées sur l'âme cylindrique.

De manière préférentielle, chaque dispositif de réglage (20) de la profondeur de travail s'étend, en vue de côté, sensiblement en avant d'un plan vertical (21) passant par le centre de l'arbre de transmission secondaire (16), compte tenu du sens d'avance (A). De façon avantageuse, les dispositifs de réglage (20) montés sur la machine de travail du sol (1) sont identiques. De plus, le faible encombrement de cette machine de travail du sol, dans le sens d'avance (A), permet de l'associer facilement à un semoir. La combinaison d'une machine de travail du sol (1) et d'un semoir permet d'accomplir différentes tâches lors d'un unique passage sur une parcelle. La préparation du lit de semence et le semis sont réalisés en un seul passage, la durée du chantier est donc réduit.

Selon une autre caractéristique de l'invention, le dispositif de réglage (20) de la profondeur de travail s'étend dans le premier tiers de la distance séparant deux plans verticaux passant respectivement par l'axe de l'articulation avant (19) du bras (18) et par l'axe horizontal (17) de l'organe de référence (7). Grâce à cette caractéristique, le dispositif de réglage (20) de la profondeur de travail est disposé proche de l'axe de l'articulation avant (19). A la lumière de la figure 2, on constate que le dispositif de réglage (20) de la profondeur de travail s'étend sensiblement entre le bord avant et le bord arrière de la poutre transversale (8) et dans la limite en hauteur du carter latéral (15). L'encombrement du dispositif de réglage (20) s'inscrit donc dans l'encombrement de la machine de travail du sol (1). Le dispositif de réglage (20) est positionné sensiblement dans le quart inférieur.

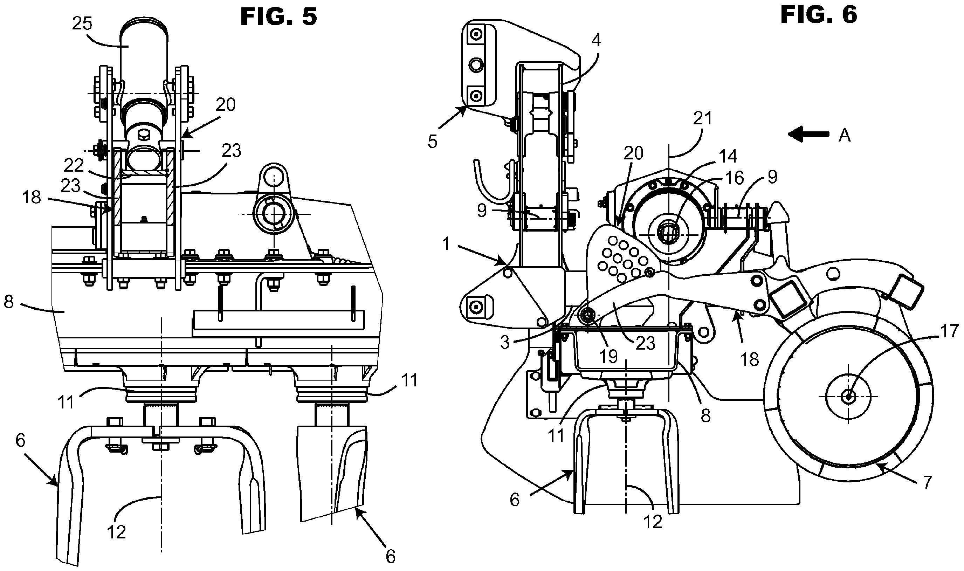

A la lumière des figures 4 et 5, au moins un des bras (18) est constitué d'une partie centrale (22) et de deux ailes (23) perpendiculaires aux extrémités de la partie centrale (22). Une ouverture (24) est ménagée dans la partie centrale (22) du bras (18). La section transversale du bras (18) est avantageusement en forme de H. Avec une telle section transversale, la résistance à la flexion du bras (18) est augmentée lorsque les poutres transversales (8) sont repliées sensiblement à la verticale pour le transport. L'inertie à la flexion est optimale par rapport aux sollicitations en flexion engendrés par les efforts verticaux. L'ouverture (24) dans la partie centrale (22) permet d'une part de réduire le poids du bras (18) et d'autre part d'accéder et d'utiliser le profil creux du bras (18). De manière alternative, la section transversale du bras (18) en forme de H peut être remplacée par une forme de U ou d'un profilé fermé composé de deux parties centrales (22) et de deux ailes (23).

D'une manière avantageuse, et tel que représenté sur les figures 1 à 5, au moins un dispositif de réglage (20) de la profondeur de travail est hydraulique. Le dispositif de réglage (20) comporte entre autres un actionneur de préférence un vérin hydraulique (25) à simple effet. Dans une alternative, le vérin hydraulique est un vérin à double effet. Le vérin hydraulique (25) assure le réglage de la profondeur de travail. Grâce au vérin hydraulique (25), le réglage de la profondeur de travail peut être réalisé depuis la cabine du tracteur et se fait en continu. Le réglage peut surtout être affiné au cours du travail et ainsi être adapté en fonction des conditions de travail et notamment en fonction du type de sol. Le dispositif de réglage (20) est également conçu pour autoriser un déplacement vers le haut de la poutre transversale (8) lorsque les outils de travail (6) rencontrent un obstacle enfoui dans le sol alors que l'organe de référence (7) reste en contact avec le sol.

D'une manière particulièrement avantageuse, chaque dispositif de réglage (20) de la profondeur de travail est hydraulique et présente un vérin hydraulique (25). Le même réglage se fera alors de manière simultanée pour tous les bras (18) de manière à obtenir une profondeur de travail homogène

D'après la figure 4, on remarque que le bras (18) présente une ouverture (24). Cette ouverture (24) est telle qu'elle autorise le passage du vérin hydraulique (25), et notamment de sa tige à travers le bras (18). Ceci permet de réduire l'encombrement en hauteur du dispositif de réglage (20) hydraulique. Le dispositif de réglage (20) est donc plus compact. Le point d'articulation du vérin hydraulique (25) au niveau de sa tige est fixé et est guidé dans une rainure (26). La rainure (26) est oblongue. Selon l'invention la rainure (26) présente une forme d'arc de cercle dont le centre est l'axe de l'articulation avant (19). Le dispositif de réglage (20) est proche de l'articulation avant (19), ainsi une modification de longueur de quelques centimètres du vérin hydraulique (25) aura comme conséquence une rotation de plusieurs degrés de l'organe de référence (7) autour de l'articulation avant (19). L'autre point d'articulation du vérin hydraulique (25) s'étend sur le corps du vérin à proximité de la tige. Avec une telle implantation du vérin hydraulique (25), l'encombrement en hauteur du dispositif de réglage (20) est encore réduit. Selon l'exemple de réalisation représenté à la figure 2, le dispositif de réglage (20) s'étend sensiblement dans le quart avant inférieur de l'arbre de transmission secondaire (16). Le quart avant inférieur est défini par le plan vertical (21) et le plan horizontal passant par le centre de l'arbre de transmission secondaire (16). La rainure (26) est positionnée dans le quart avant et inférieur de l'arbre de transmission secondaire (16).

Selon une alternative non conforme à l'invention, et représentée à la figure 6, le dispositif de réglage (20) de la profondeur de travail est manuel. Le vérin hydraulique (25) est remplacé par un secteur à trous et une broche destinée à être placée dans un des perçages. On remarque que ce dispositif de réglage manuel peut être placé en lieu et place du dispositif de réglage hydraulique. Son encombrement en hauteur est même réduit. Le dispositif de réglage manuel ne gêne pas l'entraînement avec l'arbre de transmission secondaire (16). D'une manière avantageuse, les différents perçages s'étendent dans le quart avant et inférieur de l'arbre de transmission secondaire (16).

Selon un exemple de réalisation non représenté, le châssis (3) porte trois poutres transversales (8), à savoir une poutre centrale et deux poutres latérales. Les poutres latérales sont articulées de part et d'autre de la poutre centrale selon des axes d'articulation dirigés sensiblement suivant le sens d'avance (A). Les poutres latérales peuvent être repliées vers le haut au transport au moyen d'actionneurs (10).

Selon un autre exemple de réalisation non représenté, la machine de travail du sol est réalisée sous la forme d'une fraise rotative. La fraise rotative présente un châssis constitué d'au moins une poutre transversale réalisée sous la forme d'un caisson. Elle comporte des outils de travail montés sur un rotor entraîné en rotation autour d'un axe sensiblement horizontal. Le rotor est constitué d'un tube sur lequel des flasques sont fixés à intervalles réguliers. Chaque flasque supporte quatre outils de travail qui ameublissent la terre. Un rouleau s'étend à l'arrière du rotor qui écrase les mottes, tasse et égalise une bande de terre en vue de travaux de semis. Ce rouleau permet de déterminer la profondeur de travail du rotor et donc des outils de travail. Un dispositif de réglage, selon l'invention, s'étend entre le rouleau et la poutre transversale portant le rotor. Le rouleau est lié au châssis et notamment à la poutre transversale au moyen de deux bras. Les extrémités arrière des bras guident en rotation le rouleau autour de son axe sensiblement horizontal et transversal au sens d'avance (A).

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine de travail du sol (1) comportant un châssis (3) avec des outils de travail (6) et un organe de référence (7) disposé à l'arrière des outils de travail (6) compte tenu du sens d'avance (A), le châssis (3) portant au moins une poutre transversale (8) sur laquelle est relié l'organe de référence (7) par l'intermédiaire de deux bras (18) distants l'un de l'autre, les outils de travail (6) sont répartis sous la poutre transversale (8) et sont entraînés en rotation via un carter de renvoi (14), un carter latéral (15) et un arbre de transmission secondaire (16) s'étendant sensiblement horizontalement et transversalement par rapport au sens d'avance (A) pendant le travail, un dispositif de réglage (20) de la profondeur de travail des outils de travail (6) est prévu entre chaque bras (18) et la poutre transversale (8), ***caractérisée en ce que*** au moins un dispositif de réglage (20) de la profondeur de travail s'étend, en vue de côté, sensiblement en avant d'un plan vertical (21) passant par le centre de l'arbre de transmission secondaire (16), compte tenu du sens d'avance (A), ***en ce que*** le dispositif de réglage (20) de la profondeur de travail est à réglage hydraulique et présente un vérin hydraulique (25) à simple effet, ***en ce que*** le vérin hydraulique (25) est guidé à l'une de ses extrémités dans une rainure (26), et ***en ce que*** la rainure (26) présente une forme d'arc de cercle dont le centre est l'axe de l'articulation avant (19).

2. Machine de travail du sol selon la revendication 1, ***caractérisée en ce que*** au moins un dispositif de réglage (20) de la profondeur de travail s'étend dans le premier tiers de la distance séparant deux plans verticaux passant respectivement par l'axe de l'articulation avant (19) du bras (18) et par l'axe horizontal (17) de l'organe de référence (7).

3. Machine de travail du sol selon la revendication 1 ou 2, ***caractérisée en ce que*** au moins un des bras (18) est constitué d'une partie centrale (22) et de deux ailes (23) perpendiculaires aux extrémités de la partie centrale (22).

4. Machine de travail du sol selon l'une quelconque des revendications 1 à 3, ***caractérisée en ce* que** la section transversale du bras (18) est en forme de H, de U ou de profilé fermé.

5. Machine de travail du sol selon la revendication 3 ou 4, ***caractérisée en ce* qu'**une ouverture (24) est ménagée dans la partie centrale (22) du bras (18).

6. Machine de travail du sol selon l'une quelconque des revendications 1 à 5, ***caractérisée en ce que*** le plan vertical (21) s'étend, en vue de côté, à l'arrière du plan vertical passant par l'axe vertical (12) de rotation des outils de travail (6) compte tenu du sens d'avance (A).

7. Machine de travail du sol selon l'une quelconque des revendications 1 à 6, ***caractérisée en ce que*** chaque dispositif de réglage (20) de la profondeur de travail s'étend, en vue de côté, sensiblement en avant d'un plan vertical (21) passant par le centre de l'arbre de transmission secondaire (16), compte tenu du sens d'avance (A).

## Patentansprüche

1. Bodenbearbeitungsmaschine (1) mit einem Rahmen (3) mit Arbeitswerkzeugen (6) und einem Bezugselement (7), das hinter den Arbeitswerkzeugen (6) unter Berücksichtigung der Vorschubrichtung (A) angeordnet ist, wobei der Rahmen (3) mindestens einen Querträger (8) trägt, auf dem das Bezugselement (7) mittels zweier voneinander beabstandeter Arme (18) verbunden ist, wobei die Arbeitswerkzeuge (6) unter dem Querträger (8) verteilt sind und über ein Getriebegehäuse (14) in Drehung versetzt werden, wobei sich ein Seitengehäuse (15) und eine Nebenkraftübertragungswelle (16) im Wesentlichen horizontal und quer in Bezug auf die Vorschubrichtung (A) während der Arbeit erstrecken, wobei eine Arbeitstiefeeinstellvorrichtung (20) für die Arbeitswerkzeuge (6) zwischen jedem Arm (18) und dem Querträger (8) vorgesehen ist, ***dadurch gekennzeichnet, dass*** sich mindestens eine Arbeitstiefeeinstellvorrichtung (20), von der Seite betrachtet, im Wesentlichen vor einer Vertikalebene (21) erstreckt, die durch die Mitte der Nebenkraftübertragungswelle (16) verläuft, unter Berücksichtigung der Vorschubrichtung (A), ***dass*** die Arbeitstiefeeinstellvorrichtung (20) mit hydraulischer Einstellung funktioniert und einen einfachwirkenden Hydraulikzylinder (25) aufweist, ***dass*** der Hydraulikzylinder (25) an einem seiner Enden in einer Rille (26) geführt wird, und ***dass*** die Rille (26) eine Kreisbogenform aufweist, deren Mitte die Achse der vorderen Gelenks (19) ist.

2. Bodenbearbeitungsmaschine nach Anspruch 1, ***dadurch gekennzeichnet, dass*** sich mindestens eine Arbeitstiefeeinstellvorrichtung (20) im ersten Drittel des Abstands erstreckt, welcher zwei Vertikalebenen trennt, die jeweils durch die Achse des vorderen Gelenks (19) des Arms (18) und durch die horizontale Achse (17) des Bezugselements (7) verlaufen.

3. Bodenbearbeitungsmaschine nach Anspruch 1 oder 2, ***dadurch gekennzeichnet, dass*** mindestens einer der Anne (18) von einem Mittelteil (22) und von zwei Flanschen (23) gebildet wird, die senkrecht zu den Enden des Mittelteils (22) verlaufen.

4. Bodenbearbeitungsmaschine nach irgendeinem der Ansprüche 1 bis 3, ***dadurch gekennzeichnet, dass*** der Querschnitt des Arms (18) eine H-Form, eine U-Form oder ein Vollprofil aufweist.

5. Bodenbearbeitungsmaschine nach Anspruch 3 oder 4, ***dadurch gekennzeichnet, dass*** eine Öffnung (24) im Mittelteil (22) des Arms (18) vorgesehen ist.

6. Bodenbearbeitungsmaschine nach irgendeinem der Ansprüche 1 bis 5, ***dadurch gekennzeichnet, dass*** sich die Vertikalebene (21), von der Seite betrachtet, hinter der Vertikalebene erstreckt, die durch die vertikale Drehachse (12) der Arbeitswerkzeuge (6) verläuft, unter Berücksichtigung der Vorschubrichtung (A).

7. Bodenbearbeitungsmaschine nach irgendeinem der Ansprüche 1 bis 6, ***dadurch gekennzeichnet, dass*** sich jede Arbeitstiefeeinstellvorrichtung (20), von der Seite betrachtet, im Wesentlichen vor einer Vertikalebene (21) erstreckt, die durch die Mitte der Nebenkraftübertragungswelle (16) verläuft, unter Berücksichtigung der Vorschubrichtung (A).

## Claims

1. Soil-working machine (1) comprising a chassis (3) with work tools (6) and a reference member (7) arranged at the rear of the work tools (6), taking into consideration the direction of advance (A), the chassis (3) carrying at least one transverse beam (8) on which the reference member (7) is connected by means of two arms (18) which are remote from one another, the work tools (6) are distributed beneath the transverse beam (8) and are driven in rotation via a gearbox (14), a lateral casing (15) and a secondary transmission shaft (16) extending substantially horizontally and transversely with respect to the direction of advance (A) during work, an adjustment device (20) of the working depth of the work tools (6) is provided between each arm (18) and the transverse beam (8), ***characterized in* that** at least one adjustment device (20) of the working depth extends, in side view, substantially in front of a vertical plane (21) passing through the centre of the secondary transmission shaft (16), taking into consideration the direction of advance (A), ***in* that** the adjustment device (20) of the working depth is hydraulically adjustable and has a single-acting hydraulic jack (25), ***in* that** the hydraulic jack (25) is guided at one of its ends in a groove (26), and ***in* that** the groove (26) has the form of an arc of a circle, the centre of which is the axis of the front articulation (19).

2. Soil-working machine according to claim 1, ***characterized in* that** at least one adjustment device (20) of the working depth extends in the first third of the distance separating two vertical planes passing respectively through the axis of the front articulation (19) of the arm (18) and through the horizontal axis (17) of the reference member (7).

3. Soil-working machine according to claim 1 or 2, ***characterized in* that** at least one of the arms (18) is constituted by a central part (22) and by two wings (23) perpendicular to the ends of the central part (22).

4. Soil-working machine according to any one of claims 1 to 3, ***characterized in* that** the transverse section of the arm (18) is H-shaped, U-shaped or in the form of a closed profile.

5. Soil-working machine according to claim 3 or 4, ***characterized in* that** an opening (24) is made in the central part (22) of the arm (18).

6. Soil-working machine according to any one of claims 1 to 5, ***characterized in* that** the vertical plane (21) extends, in side view, at the rear of the vertical plane passing through the vertical rotation axis (12) of the work tools (6) taking into consideration the direction of advance (A).

7. Soil-working machine according to any one of claims 1 to 6, ***characterized in* that** each adjustment device (20) of the working depth extends, in side view, substantially in front of a vertical plane (21) passing through the centre of the secondary transmission shaft (16), taking into consideration the direction of advance (A).
